# EUROPÄISCHE PATENTSCHRIFT

(11) **EP 1 475 748 B1**
(45) Veröffentlichungstag und Bekanntmachung des Hinweises auf die Patenterteilung: **11.03.2009**
(21) Anmeldenummer: 04008993.0
(22) Anmeldetag: 15.04.2004
(51) Int. Cl.: G06T 7/00

(54) **Verfahren und Anordnung zur Erfassung von Objekten**
Method and apparatus for acquisition of objects
Procédé et appareil pour enregistrement d'objets

(30) Priorität: 08.05.2003 DE 10320661
(43) Veröffentlichungstag der Anmeldung: 10.11.2004
(73) Patentinhaber: SIEMENS AKTIENGESELLSCHAFT, 80333 München (DE)
(72) Erfinder: Beil, Oliver, 76344 Eggenstein-Leopoldshafen (DE); Bozenhardt, Johannes, 76275 Ettlingen (DE)

(56) Entgegenhaltungen:
- US-A- 4 753 569
- US-A- 5 909 285
- DAVIES E R: "Machine Vision: Theory, Algorithms, Practicalities" 1997, , XP002369129 * Kapitel 19.5 * * Seiten 471-502 *

## Beschreibung

Die Erfindung betrifft ein Verfahren zur Erfassung von Objekten, insbesondere zur optischen Erfassung von Gegenständen, welche sich vor einem wenigstens ein markantes Element aufweisenden Hintergrund befinden, mit einem in einer festen Position angeordneten Aufnahmeelement, mittels dem vom Hintergrund und gegebenenfalls von einem jeweiligen Objekt ausgehende Strahlung empfangen wird, wobei das jeweilige Objekt nach seiner Erfassung mit einem zugehörigen Referenzobjekt verglichen wird.

Des Weiteren betrifft die Erfindung eine Anordnung zur Durchführung eines Verfahrens zur Erfassung von Objekten, insbesondere zur optischen Erfassung von Gegenständen, welche sich vor einem wenigstens ein markantes Element aufweisenden Hintergrund befinden, nach einem der Ansprüche 1 bis 5, mit einem Aufnahmeelement, mittels dem eine Abbildung des Objektes vor dem Hintergrund bzw. eine Abbildung des Hintergrunds rasterförmig erfassbar ist, einem ersten Speicher zur Speicherung von Referenzdaten, welche Abbildungen von fehlerfreien Objekten vor dem Hintergrund entsprechen, und einer ersten vergleichseinheit, mittels welcher jeweils aktuell erfasste Objektdaten mit den Referenzdaten verglichen werden.

Die Klassifikation und Prüfung von Objekten, die unter dem Begriff "Überprüfung der Formgenauigkeit eines Objekts" zusammenfassbar sind, sind in der Automatisierungstechnik, insbesondere in der industriellen Bildauswertung, häufig wiederkehrende Aufgaben. Unter Klassifikation versteht man in diesem Zusammenhang, eine Entscheidung zu treffen, ob es sich bei einem in einem Bildausschnitt aufgenommenen Objekt um ein bestimmtes Objekt handelt oder nicht. Diese Klassifikation erfolgt meist durch Vergleich der Objektbilddaten mit den Abbildungsdaten eines zuvor aufgenommenen Referenzobjektes. Bei der Prüfung eines Objekts wird beispielsweise die Maßhaltigkeit oder Vollständigkeit des zu prüfenden Objekts im Vergleich zu einem Referenzobjekt ermittelt und überwacht, ob zulässige Abweichungstoleranzen nicht überschritten werden.

Wenngleich die bekannten Verfahren zur Klassifikation und Prüfung eines Objektes auch sehr gute Ergebnisse liefern, so haftet ihnen dennoch der Nachteil an, dass ein beispielsweise wegen eines Defekts erforderlicher Austausch des Aufnahmeelements sehr aufwendig ist. Denn für die nach dem Austausch weitere Verwendung der mittels des ursprünglichen Aufnahmeelements erstellten Abbildungsdaten des Referenzobjekts ist es erforderlich, dass das neue Aufnahmeelement dieselben Daten liefert, wie sie das bisherige Aufnahmeelement geliefert hätte. D. h., das neue Aufnahmeelement muss so angeordnet sein, dass es bezogen auf den Hintergrund denselben Abstand und denselben Blickwinkel wie das ersetzte Aufnahmeelement hat sowie dass es keinen seitlichen Versatz aufweist. Um dies zu erreichen, müssen an die Mechanik, auf der das Aufnahmeelement angeordnet ist, sehr hohe Anforderungen gestellt werden. Dies führt zu hohen Kosten.

Des Weiteren ist zu beachten, dass insbesondere bei Bildaufnahmeelementen, welche heute regelmäßig ein Halbleiterelement aufweisen, das Halbleiterelement gegenüber dem Gehäuse und der Optik des Bildaufnahmeelements unterschiedliche Positionen haben kann. Es muss daher bereits bei der Herstellung des Bildaufnahmeelements eine sehr hohe Präzision angewandt werden.

Sofern nicht erreicht werden kann, dass das Aufnahmeelement ohne Abweichungen durch ein neues Aufnahmeelement ersetzt werden kann, ist es erforderlich, die Abbildungsdaten der Referenzobjekte neu zu erfassen. Dies ist insbesondere dann sehr aufwendig, wenn mit der betreffenden Anordnung eine Vielzahl unterschiedlicher Objekte überprüft werden soll und daher die Abbildungsdaten einer entsprechend hohen Anzahl von Referenzobjekten vorhanden sind.

Aus der US-A-4 753 569 sind ein Verfahren und eine Vorrichtung zum Kalibrieren eines rechnergesteuerten Roboters bekannt. Es ist wenigstens eine Kamera vorhanden, welche an einem Roboterarm oder an einer Arbeitsstation befestigt ist. Mittels der Kamera werden Markierungen erfasst, welche wenigstens drei fest zueinander angeordnete Punkte aufweisen, und entweder an der Arbeitsstation oder am Roboterarm befestigt sind.

Erreicht der Roboterarm eine seiner vorbestimmten Position zugeordnete Referenzposition, erfasst die Kamera die Markierung und vergleicht sie mit einem abgespeicherten Muster. Stimmt die Markierung mit dem abgespeicherten Muster nicht überein, wird die Position des Roboterarms so lange verändert, bis die Abweichung der aufgenommenen Markierung mit dem abgespeicherten Muster unterhalb einer vorbestimmten Toleranz liegt. Sobald die Abweichung unterhalb der vorbestimmten Toleranz liegt, wird der Steuerung des Roboters mitgeteilt, dass sich der Roboterarm in seiner Referenzposition befindet, und der Arbeitsgang des Roboters wird fortgesetzt.

Des Weiteren ist aus Davies E. R.: "Machine Vision: Theory, Algorithms, Practicalities - Passage" Machine Vision: Theory, Algorithms, Practicalities, 1997, Seiten 471-502, XP002369129, ein Verfahren zur optischen Inspektion bekannt, bei welchem die optische Inspektion als Vergleich mit einem Referenzobjekt durchgeführt wird.

Es ist Aufgabe der Erfindung, ein eingangs genanntes Verfahren bzw. eine eingangs genannte Anordnung zur Durchführung eines Verfahrens zur Erfassung von Objekten, insbesondere zur optischen Erfassung von Gegenständen, welche sich vor einem wenigstens ein markantes Element aufweisenden Hintergrund befinden, anzugeben, welches bzw. welche einen einfachen und schnellen Austausch des Aufnahmeelements bei hoher Zuverlässigkeit ermöglicht.

Die Lösung dieser Aufgabe ergibt sich aus den Merkmalen der Ansprüche 1 bis 3 oder 6 bis 8. Vorteilhafte Weiterbildungen der Erfindung ergeben sich aus den Unteransprüchen.

Gemäß der Erfindung ist ein Verfahren zur Erfassung von Objekten, insbesondere zur optischen Erfassung von Gegenständen, welche sich vor einem wenigstens ein markantes Element aufweisenden Hintergrund befinden, mit einem in einer festen Position angeordneten Aufnahmeelement, mittels dem vom Hintergrund und gegebenenfalls von einem jeweiligen Objekt ausgehende Strahlung empfangen wird, wobei das jeweilige Objekt nach seiner Erfassung mit einem zugehörigen Referenzobjekt verglichen wird, **dadurch gekennzeichnet, dass** nach der ersten Anordnung des Aufnahmeelements mittels des Aufnahmeelements eine Urabbildung des Hintergrunds erfasst wird und die Daten der Urabbildung gespeichert werden und nach einem Austausch des Aufnahmeelements eine weitere Abbildung des Hintergrunds erfasst wird, die Daten der weiteren Abbildung mit den Daten der Urabbildung verglichen werden und das Aufnahmeelement so lange justiert wird, bis sich die Daten der Urabbildung und die Daten der weiteren Abbildung um einen vorbestimmten maximalen Toleranzwert unterscheiden.

Des Weiteren ist gemäß der Erfindung eine Anordnung zur Durchführung eines Verfahrens zur Erfassung von Objekten, insbesondere zur optischen Erfassung von Gegenständen, welche sich vor einem wenigstens ein markantes Element aufweisenden Hintergrund befinden, insbesondere nach einem der Ansprüche 1 bis 5, mit einem Aufnahmeelement, mittels dem eine Abbildung des Objektes vor dem Hintergrund bzw. eine Abbildung des Hintergrunds rasterförmig erfassbar ist, einem ersten Speicher zur Speicherung von Referenzdaten, welche Abbildungen von fehlerfreien Objekten vor dem Hintergrund entsprechen, und einer ersten Vergleichseinheit, mittels welcher jeweils aktuell erfasste Objektdaten mit den Referenzdaten verglichen werden, **dadurch gekennzeichnet, dass** ein dritter Speicher vorhanden ist zur Speicherung von Daten der Abbildung des Hintergrundes und eine zweite Vergleichseinheit vorhanden ist, mittels welcher die gespeicherten Abbildungsdaten des Hintergrunds mit Daten des aktuell erfassten Hintergrundes verglichen werden.

Dadurch, dass nach der ersten Anordnung des Aufnahmeelements eine Abbildung des Hintergrundes erfasst und gespeichert wird, stehen Daten zur Verfügung, welche einen auf der ursprünglichen Position des Aufnahmeelements beruhenden Zustand widerspiegeln. Wenn nach einem Austausch des Aufnahmeelements das neue Aufnahmeelement dieselben Daten vom Hintergrund liefert, bedeutet dies, dass das neue Aufnahmeelement exakt in derselben Position angeordnet ist wie das ersetzte Aufnahmeelement bzw. dass sich das neue Aufnahmeelement so verhält, d. h. von mittels des neuen Aufnahmeelements erfassten Objekten dieselben Daten liefert wie das ersetzte Aufnahmeelement.

Daher wird gemäß der Erfindung nach einem Austausch des Aufnahmeelements eine weitere Abbildung des Hintergrunds erfasst. Die Daten der weiteren Abbildung werden dann mit den Daten der Urabbildung verglichen, wobei das neue Aufnahmeelement in iterativer Weise justiert wird, bis die Daten der weiteren Abbildung mit den Daten der Urabbildung übereinstimmen bzw. sich lediglich noch um einen vorbestimmten maximalen Toleranzwert unterscheiden.

Dadurch, dass das Aufnahmeelement so lange justiert wird, bis die Daten der weiteren Abbildung im Wesentlichen mit den Daten der Urabbildung übereinstimmen, wird in besonders vorteilhafter Weise erreicht, dass nahezu alle Toleranzen, die das neue Aufnahmeelement aufweist, ausgeglichen werden. Insbesondere braucht beispielsweise bei einem optischen Aufnahmeelement wie einer Kamera nicht mehr gefordert werden, dass das Sensorelement im Kameragehäuse exakt angeordnet ist. Dies wirkt sich sehr vorteilhaft auf die Herstellungskosten aus.

Des Weiteren lässt sich unter Anwendung des erfindungsgemäßen Verfahrens das Aufnahmeelement auf besonders einfache Weise und damit schnell und kostengünstig austauschen. So kann beim Wechsel des Aufnahmeelements beispielsweise eine Auswertesoftware die Daten der aktuellen Abbildung des Hintergrundes mit den bei der Erstinstallation des Aufnahmeelements gespeicherten Daten der ursprünglichen Abbildung des Hintergrunds vergleichen, wobei als Ergebnis des Vergleichs die Richtung angezeigt werden könnte, in die die Position des Aufnahmeelements verändert werden muss. Die Position des Aufnahmeelements wird dann so lange verändert, bis die Daten der aktuellen Abbildung des Hintergrunds mit den Daten der Urabbildung des Hintergrunds bis auf einen vorbestimmten Toleranzwert übereinstimmen.

Um die Anforderungen an die Justage des Aufnahmeelements nicht zu hoch stellen zu müssen, ist vorgesehen, dass beispielsweise bei einem rasterförmig angeordnete Abbildungspunkte aufweisenden Aufnahmeelement zur Feinjustage ein erster Korrekturwert dadurch gebildet wird, dass festgestellt wird, um welchen Faktor die weitere Abbildung des Hintergrunds gegenüber der Urabbildung des Hintergrunds vergrößert bzw. verkleinert ist (Zoom). Dies kann beispielsweise dadurch geschehen, dass beispielsweise das markante Element des Hintergrundes zwei Messpunkte hat, deren Abstand zur Berechnung eines den ersten Korrekturwert bildenden hier so genannten Zoomfaktors, d. h. eines Faktors, um den die weitere Abbildung des Hintergrunds gegenüber der Urabbildung des Hintergrunds vergrößert bzw. verkleinert ist, verwendet wird. Hierzu wird aus dem Abstand der Messpunkte der aktuellen Abbildung des Hintergrunds und dem Abstand der Messpunkte der Urabbildung des Hintergrunds der Quotient gebildet. Der Quotient gibt dann den Faktor an, um den die aktuelle Abbildung, d. h. die weitere Abbildung des Hintergrundes, gegenüber der Urabbildung des Hintergrunds vergrößert bzw. verkleinert ist.

Mittels des Zoomfaktors lassen sich die wegen einer geringen Restabweichung der Position des neuen Aufnahmeelements von der Position des bisherigen Aufnahmeelements noch mit einem geringen Fehler behafteten Abbildungsdaten des Aufnahmeelements korrigieren. Entsprechend dem Zoomfaktor können die Daten eines vom Aufnahmeelement erfassten Objektes so weit korrigiert werden, dass die vom neuen Aufnahmeelement erzeugte Abbildung des Objektes das Objekt in derselben Größe darstellt, wie das ersetzte bzw. ursprüngliche Aufnahmeelement das Objekt dargestellt hätte.

In besonders vorteilhafter Weise ist vorgesehen, dass mittels der Korrekturwerte die Daten der Referenzobjekte korrigiert werden können. Dies hat den Vorteil, dass nicht die Abbildungsdaten von jedem aktuell erfassten Objekt korrigiert werden müssen; denn, da die Abbildungsdaten der Referenzobjekte korrigiert wurden, wurden die Abbildungen der Referenzobjekte an die Abbildungen der aktuell erfassten Objekte angepasst. D. h., die Größe der Abbildungen der Referenzobjekte wurde entsprechend dem Zoomfaktor gegebenenfalls an die Größe der Abbildungen der aktuell erfassten Objekte angepasst oder die Lage der Abbildungen der Referenzobjekte wurde entsprechend der Drehung gegebenenfalls an die Lage der aktuell erfassten Objekte angepasst oder die Position der Referenzobjekte wurde entsprechend der Verschiebung an die Position der aktuell erfassten Objekte angepasst, wodurch ein Vergleich der aktuellen, nicht korrigierten Abbildungsdaten mit den korrigierten Daten der Referenzobjekte ein richtiges Ergebnis liefert.

In ähnlicher Weise wie eine Korrektur einer Änderung der Größe der Abbildung, wie sie beispielsweise bei einer Veränderung des Abstands des Aufnahmeelements vom Hintergrund auftreten kann, erfolgen kann, kann auch eine beispielsweise durch eine Verdrehung des Aufnahmeelements hervorgerufene Änderung der weiteren Abbildung des Hintergrunds korrigiert werden. Hierzu wird zur Feinjustage ein zweiter Korrekturwert dadurch gebildet, dass festgestellt wird, um wieviel Grad die weitere Abbildung des Hintergrunds gegenüber der Urabbildung des Hintergrunds in einem Polar-Koordinatensystem gedreht ist, wie dies bei einer weiteren besonderen Ausführungsform der Erfindung vorgesehen ist. Entsprechend der festgestellten Verdrehung der aktuellen Abbildung des Hintergrunds können die Daten eines vom Aufnahmeelement erfassten Objektes so weit korrigiert werden, dass die vom neuen Aufnahmeelement erzeugte Abbildung des Objekts das Objekt in derselben Lage darstellt, wie das ersetzte bzw. ursprüngliche Aufnahmeelement das Objekt dargestellt hätte.

In vorteilhafter Weise können jedoch mittels des zweiten Korrekturwertes die Daten der Referenzobjekte korrigiert werden, wie dies auch schon bei der Korrektur der geänderten Größe der aktuellen Abbildung vorgeschlagen wurde.

Des Weiteren kann bei einem rasterförmig angeordnete Ausbildungspunkte aufweisenden Aufnahmeelement zur Feinjustage ein dritter Korrekturwert dadurch gebildet werden, dass festgestellt wird, um wieviel Abbildungspunkte die weitere Abbildung des Hintergrunds gegenüber der Urabbildung des Hintergrunds in einem rechtwinkligen Koordinatensystem jeweils in Richtung der beiden Koordinaten verschoben ist. Mittels des dritten Korrekturwerts können die Daten eines vom Aufnahmeelement erfassten Objekts so weit korrigiert werden, dass die vom neuen Aufnahmeelement erzeugte Abbildung des Objekts das Objekt an derselben Stelle darstellt, an der das ersetzte Aufnahmeelement das Objekt dargestellt hätte. Hierzu müssen die Bildpunkte der vom neuen Aufnahmeelement erzeugten Abbildung lediglich jeweils um die entsprechende Anzahl der Abbildungspunkte in Richtung der beiden Koordinaten verschoben werden.

In vorteilhafter Weise können jedoch mittels des dritten Korrekturwerts die Daten der Referenzobjekte korrigiert werden, wie dies auch schon bei der Korrektur der geänderten Größe der aktuellen Abbildung oder der Korrektur der Verdrehung der aktuellen Abbildung vorgeschlagen wurde.

Bei einer weiteren besonderen Ausführungsform der Erfindung ist vorgesehen, dass Daten der weiteren Abbildung des Hintergrundes mit einem reziproken Korrekturwert korrigiert werden und aus einem Vergleich der so korrigierten Daten mit den Daten der Urabbildung ein Genauigkeitswert ermittelt wird.

Mittels des Genauigkeitswertes lässt sich eine Aussage über die Qualität der Korrekturwerte machen; denn, wenngleich die Korrekturwerte, die aus wenigen Punkten bestimmt wurden, im Idealfall auch für alle Bereiche der Abbildung des Hintergrundes gelten, besteht dennoch die Möglichkeit, dass sie nur für einen bestimmten Bereich der Abbildung des Hintergrundes zutreffen. So könnte beispielsweise durch eine Verkantung des Aufnahmeelements der Zoomfaktor am oberen Rand der Abbildung des Hintergrunds kleiner sein als am unteren Rand der Abbildung. Wird der Zoomfaktor durch einen Vergleich eines sich im oberen Bereich der Abbildung des Hintergrunds befindlichen Ausschnitts der Abbildung ermittelt, würde er bei einer Anwendung auf Daten, welche den mittleren oder unteren Bereich der Abbildung betreffen, falsche Ergebnisse liefern.

Durch einen Vergleich von mit dem reziproken ersten Korrekturwert korrigierten Abbildungsdaten des mittleren oder unteren Bereichs der aktuell erfassten Abbildung mit den betreffenden Abbildungsdaten der Urabbildung können diese Unterschiede sichtbar gemacht werden.

Ergibt der Vergleich, dass keine bzw. nur geringe Unterschiede vorhanden sind, kann daraus gefolgert werden, dass der Korrekturwert, d. h. im vorliegenden Fall der ermittelte Zoomfaktor, eine hohe Genauigkeit hat und für die Korrektur der Referenzobjekte die gleiche hohe Genauigkeit angenommen werden kann.

Die Ausführungen betreffend den Zoomfaktor gelten auch für den zweiten Korrekturwert betreffend eine Verdrehung der Abbildung und den dritten Korrekturwert betreffend die Verschiebung der Abbildung. D. h., durch einen Vergleich von mit dem reziproken zweiten und/oder dritten Korrekturwert korrigierten Abbildungsdaten eines anderen Bereichs der aktuell erfassten Abbildung als dem Bereich, der zur Bildung der Korrekturwerte verwendet wurde, mit den betreffenden Abbildungsdaten der Urabbildung kann eine Aussage über die Qualität der Korrekturwerte gemacht werden.

Statt entsprechende Abbildungsdaten der aktuell erfassten Abbildung mit einem reziproken Korrekturwert zu verändern, könnten zu einer Aussage über die Qualität der Korrekturwerte die Korrekturwerte auch aufgrund von Abbildungsdaten erstellt werden, welche unterschiedliche Bereiche der Abbildung betreffen. Ein Vergleich der unterschiedliche Bereiche der Abbildung betreffenden Korrekturwerte lässt ebenfalls eine Aussage über die Qualität der Korrekturwerte zu. Sind keine oder nur sehr geringe Abweichungen vorhanden, besitzen die entsprechenden Korrekturwerte eine sehr hohe Güte. Je größer die Abweichungen sind, desto geringer ist die Qualität der Korrekturwerte.

Bei einer weiteren besonderen Ausführungsform der Erfindung ist vorgesehen, dass das markante Element durch eine vorbestimmte Anordnung von Strahlungssendern gebildet wird, welche vom Aufnahmeelement erfassbar ist. Dies könnte bei einem optischen Aufnahmeelement beispielsweise dadurch geschehen, dass das Objekt mit Gegenlicht beleuchtet wird, was heißt, dass sich das Objekt zwischen dem Aufnahmeelement und der Lichtquelle, welche in diesem Fall in vorteilhafter Weise aus einem Array von Leuchtdioden besteht, welche hinter einer Milchglasscheibe angeordnet sind, befindet. Durch geeignete Wahl der Leuchtdauer der Leuchtdioden und der Belichtungsdauer des Aufnahmeelements kann das Aufnahmeelement eine Abbildung erzeugen, welche aus einer Anordnung von hellen Flecken besteht, welche durch das Milchglas und die Schärfentiefe bedingt einen Grauverlauf als Rand haben. Dieses Bild kann dann als Schwarzweißbild weiterverarbeitet werden. Das markante Element kann dann durch eine entsprechende Ansteuerung einer vorbestimmten Anzahl von Leuchtdioden gebildet werden.

Mittels der erfindungsgemäßen Anordnung lässt sich das erfindungsgemäße Verfahren auf einfache Weise durchführen. Dadurch, dass ein dritter Speicher vorhanden ist zur Speicherung von Daten einer Urabbildung des Hintergrundes, welche nach der Erstinstallation des Aufnahmeelements von dem Aufnahmeelement erfasst wurden, ist sichergestellt, dass die Daten der ursprünglichen Abbildung des Hintergrundes für spätere Vergleiche unverändert zur Verfügung stehen. Es ist hierdurch somit möglich, bei einem Ersatz des Aufnahmeelements das neue Aufnahmeelement so auszurichten, dass es nahezu exakt dieselben Abbildungsdaten liefert, wie das ersetzte Aufnahmeelement. Selbstverständlich lassen sich die gespeicherten Daten der Urabbildung des Hintergrundes auch bei einer unbeabsichtigt erfolgten Dejustage des Aufnahmeelements zur Wiederherstellung des ursprünglichen Zustands verwenden.

Die Justage des neuen Aufnahmeelements bzw. des dejustierten Aufnahmeelements geschieht mittels einer Vergleichseinheit, mittels der die gespeicherten Urabbildungsdaten des Hintergrunds mit Daten des aktuell erfassten Hintergrunds verglichen werden. Mittels der Vergleichseinheit lässt sich feststellen, ob das Aufnahmeelement von dem Hintergrund dieselbe Abbildung, d. h. dieselben Abbildungsdaten liefert, wie sie das ersetzte bzw. das noch nicht dejustierte Aufnahmeelement vom Hintergrund geliefert hat. In Abhängigkeit des Ausgangssignals der Vergleichseinheit kann die Position des Aufnahmeelements verändert werden. Ergibt das Ausgangssignal der Vergleichseinheit, dass nur noch geringe Abweichungen vorhanden sind, bedeutet dies, dass das neue Aufnahmeelement bzw. das dejustierte Aufnahmeelement bis auf geringe Abweichungen wieder in derselben Position ist wie das ursprüngliche Aufnahmeelement.

Besonders vorteilhaft ist es, dass eine zweite Vergleichseinheit vorhanden ist, mittels welcher feststellbar ist, um welchen Faktor die Abbildung des aktuell erfassten Hintergrundes gegenüber der gespeicherten Abbildung des Hintergrundes vergrößert bzw. verkleinert ist, und ein Speicher vorhanden ist zur Speicherung von um die ermittelte Vergrößerung bzw. Verkleinerung korrigierte Referenzdaten. Mittels der zweiten Vergleichseinheit lässt sich auf einfache Weise der Zoomfaktor ermitteln, um welchen die vom neuen Aufnahmeelement erzeugte Abbildung des Hintergrundes von der Urabbildung des Hintergrundes abweicht. Um diesen Faktor lassen sich dann die Abbildungsdaten der Referenzobjekte korrigieren. Damit die ursprünglichen Abbildungsdaten der Referenzobjekte unverändert erhalten bleiben, werden die korrigierten Abbildungsdaten in den Speicher gespeichert. Dort stehen sie dann für den weiteren Betrieb der Anordnung zur Verfügung.

Sehr vorteilhaft ist es auch, dass eine dritte Vergleichseinheit vorhanden ist, mittels welcher feststellbar ist, um wie viel Grad die Abbildung des aktuell erfassten Hintergrundes gegenüber der gespeicherten Abbildung des Hintergrundes gedreht ist, und ein Speicher vorhanden ist zur Speicherung von um die ermittelte Drehung korrigierte Referenzdaten.

Ebenso wie mit der zweiten Vergleichseinheit eine Korrektur der Abbildungsdaten ermöglicht wird und mittels des dritten Speichers korrigierte Referenzdaten zur Verfügung gestellt werden, werden mit der dritten Vergleichseinheit die entsprechenden Abbildungsdaten korrigiert und im Speicher korrigierte Referenzdaten zur Verfügung gestellt.

Dasselbe gilt auch, wenn bei einem rasterförmig angeordnete Abbildungspunkte aufweisenden Aufnahmeelement eine vierte Vergleichseinheit vorhanden ist, mittels welcher feststellbar ist, um wie viele Abbildungspunkte die Abbildung des aktuell erfassten Hintergrundes gegenüber der gespeicherten Abbildung des Hintergrundes in einem rechtwinkligen Koordinatensystem jeweils in Richtung der beiden Koordinaten verschoben ist, und ein Speicher vorhanden ist zur Speicherung von um die ermittelten Abbildungspunkte korrigierte Referenzdaten.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigen:
- Figur 1: eine schematische Darstellung einer erfindungsgemäßen Anordnung und
- Figur 2: eine Urabbildung eines Hintergrunds im Vergleich mit einer von einem dejustierten Aufnahmeelement erzeugten Abbildung desselben Hintergrundes.

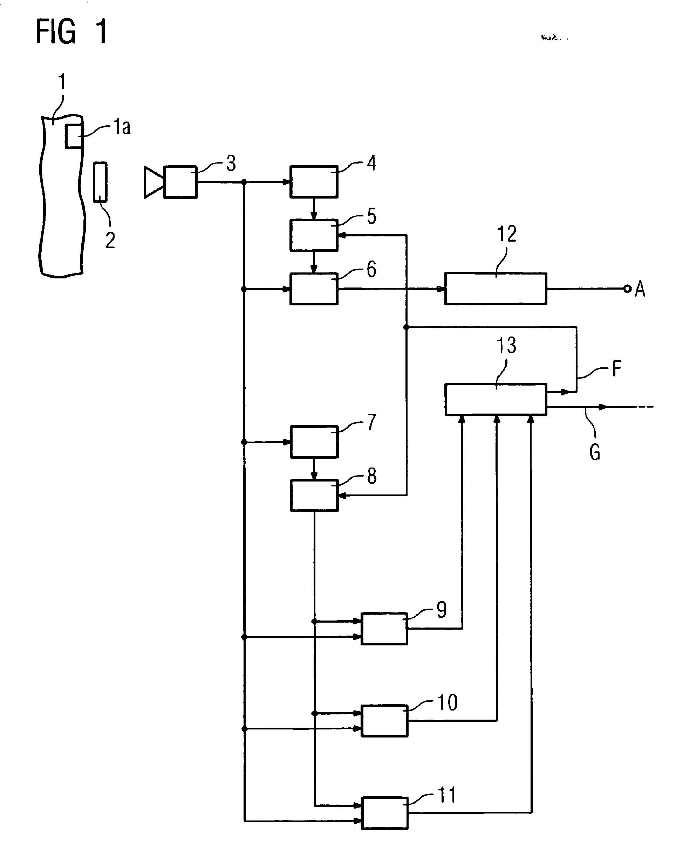

Wie Figur 1 entnommen werden kann, ist vor einem Hintergrund 1 ein von einem Aufnahmeelement 3 zu erfassendes Objekt 2 angeordnet. Der Hintergrund 1 weist ein markantes Element 1a auf, welches beispielsweise als Kreuz ausgebildet sein kann oder durch zwei Punkte A, B; A', B' gebildet werden kann, deren Verbindungslinie sich diagonal über den Hintergrund 1 erstreckt. Das Aufnahmeelement 3 ist als Kamera ausgebildet, welche als Bildsensor ein Halbleiterelement mit rasterförmig angeordneten Bildpunkten hat.

Die Kamera 3 ist mit einem ersten Speicher 4 verbunden, in welchen Abbildungsdaten von fehlerfreien Objekten (Referenzobjekte) als Referenzdaten gespeichert werden. Der erste Speicher 4 ist mit einem zweiten Speicher 5 verbunden, in welchem eine Arbeitskopie der Referenzobjektdaten gespeichert wird. Hierdurch können die Ursprungsdaten im ersten Speicher 4 unverändert gespeichert bleiben.

Der Ausgang des zweiten Speichers 5 ist mit einer ersten Vergleichseinheit 6 verbunden. Des Weiteren ist die Kamera 3 mit der ersten Vergleichseinheit 6 verbunden. Mittels der ersten Vergleichseinheit 6 werden Daten einer von der Kamera 3 aktuell erzeugten Abbildung eines zu erfassenden Objekts 2 mit den im zweiten Speicher 5 gespeicherten Referenzdaten verglichen. Als Ergebnis des Vergleichs kann das aktuell erfasste Objekt klassifiziert werden, wozu die Vergleichseinheit 6 mit einem Klassifizierer 12 verbunden ist. Am Ausgang A des Klassifizierers 12 steht das Ergebnis der Klassifikation zur weiteren Verarbeitung zur Verfügung.

Die Kamera 3 ist des Weiteren mit einem dritten Speicher 7 verbunden, in welchen nach der ersten Installation der Kamera 3 von der Kamera 3 gelieferte Referenzabbildungsdaten des Hintergrundes 1 gespeichert werden, wobei sich kein Objekt 2 vor dem Hintergrund 1 befindet. Der dritte Speicher 7 ist mit einem vierten Speicher 8 verbunden, in welchem eine Arbeitskopie der Referenzhintergrunddaten abgespeichert wird.

Der Ausgang des vierten Speichers 8 ist mit einer zweiten Vergleichseinheit 9 verbunden. Des Weiteren ist der Ausgang des vierten Speichers 8 mit einer dritten Vergleichseinheit 10 und einer vierten Vergleichseinheit 11 verbunden. Die zweite Vergleichseinheit 9, die dritte Vergleichseinheit 10 und die vierte Vergleichseinheit 11 sind des Weiteren ebenfalls mit der Kamera 3 verbunden. Die Ausgänge der zweiten Vergleichseinheit 9, der dritten Vergleichseinheit 10 und der vierten Vergleichseinheit 11 sind mit einer Steuerung 13 verbunden, in welcher die betreffenden Signale weiterverarbeitet werden.

Die Steuerung 13 weist einen ersten Kontrollausgang G sowie einen zweiten Kontrollausgang F auf. Mittels des ersten Kontrollausgangs G der Steuerung 13 kann angezeigt werden, ob eine Grobkorrektur erfolgen muss. Der zweite Kontrollausgang F ist mit dem zweiten Speicher 5 sowie dem vierten Speicher 8 verbunden. Mittels des zweiten Kontrollausgangs F der Steuerung 13 lassen sich die im zweiten Speicher 5 gespeicherten Daten der Arbeitskopie der Referenzobjektdaten sowie die im vierten Speicher 8 gespeicherten Daten der Arbeitskopie der Referenzhintergrunddaten korrigieren.

Nachdem im dritten Speicher 7 die Daten der Urabbildung des Hintergrundes 1 gespeichert wurden, kann die Anordnung in Betrieb genommen werden. D. h., die Kamera 3 erstellt von fehlerfreien Exemplaren von den von der Anordnung zu prüfenden Objekten 2 Abbildungen. Diese Abbildungen werden als Referenzabbildungen im ersten Speicher 4 gespeichert. Die im ersten Speicher 4 und im dritten Speicher 7 gespeicherten Daten werden jeweils als Arbeitskopie in den zweiten Speicher 5 bzw. den vierten Speicher 8 gespeichert. Mit den im zweiten Speicher 5 gespeicherten Referenzabbildungen werden mittels der ersten Vergleichseinheit 4 die aktuellen Abbildungen der sich vor der Kamera 3 befindlichen zu prüfenden Objekte 2 verglichen. In dem Klassifizierer 12 wird in Abhängigkeit der Übereinstimmung der Abbildungsdaten eine Klassifizierung des jeweiligen Objektes 2 vorgenommen. Das Ergebnis der Klassifizierung wird an dem Ausgang A des Klassifizierers 12 ausgegeben.

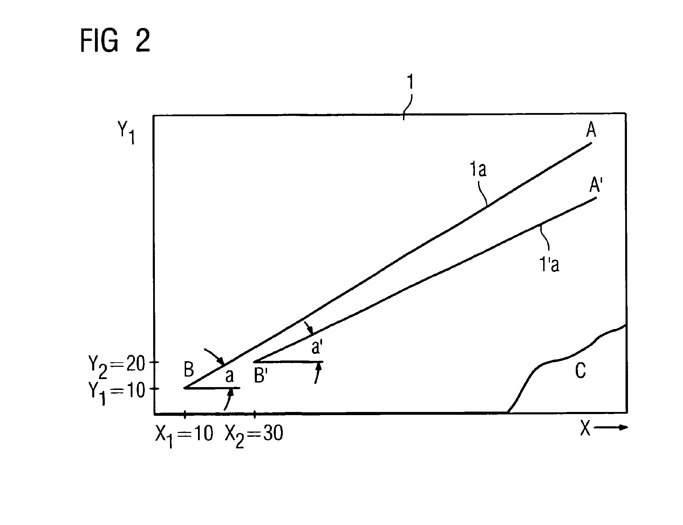

Hat aufgrund einer äußeren Einwirkung eine Dejustage der Kamera 3 stattgefunden oder muss die Kamera 3 wegen eines Defekts durch eine neue Kamera 3 ersetzt werden, muss die Kamera 3 neu justiert werden. Hierzu erzeugt die Kamera 3 zunächst von dem Hintergrund 1 eine Abbildung ohne Objekt 2. Diese Abbildung wird in der zweiten Vergleichseinheit 9 mit der im vierten Speicher 8 gespeicherten Arbeitskopie der Urabbildung des Hintergrunds 1 verglichen. Der Vergleich kann ergeben, dass der Hintergrund 1 kleiner abgebildet wird, als er ursprünglich abgebildet wurde. Die Kamera 3 befindet sich dann näher am Hintergrund 1, als sie es bei der Erstinstallation war. Des Weiteren kann die Kamera 3 gegenüber ihrer ursprünglichen Position verdreht sowie seitlich und in ihrer Höhe verschoben sein. Ein entsprechendes Beispiel ist in Figur 2 dargestellt.

Wie Figur 2 entnommen werden kann, weist ein Hintergrund 1 als markantes Element Punkte A, B auf, welche in gegenüberliegenden Ecken des rechteckigen Hintergrundes 1 angeordnet sind. Der Abstand der beiden Punkte A, B beträgt 1500 Abbildungspunkte. Der Punkt B ist in einem Abstand von 100 Bildpunkten in Richtung der X-Koordinate vom linken Rand des Hintergrundes 1 sowie 100 Bildpunkte in Richtung der Y-Koordinate vom unteren Rand des Hintergrundes 1 angeordnet. Der Winkel der Verbindungslinie AB gegenüber dem unteren Rand des Hintergrundes 1 beträgt dreißig Grad.

Nach einer Dejustierung bzw. nach einem Ersatz der Kamera 3 ergibt sich eine Abbildung, bei der der Abstand der beiden Punkte A', B' nur noch 1200 Bildpunkte beträgt. D. h., die Abbildung ist um den Faktor 0,8 verkleinert. Diese Verkleinerung wird mittels der zweiten Vergleichseinheit 9 festgestellt.

Des Weiteren beträgt der Winkel der Verbindungslinie A'B' gegenüber dem unteren Rand des Hintergrundes 1 nur noch fünfundzwanzig Grad. D. h., die Abbildung hat sich um fünf Grad gedreht. Diese Drehung wird von der dritten Vergleichseinheit 10 festgestellt.

Darüber hinaus hat sich der untere Punkt B' um 200 Bildpunkte in Richtung der X-Koordinate und um 100 Bildpunkte in Richtung der Y-Koordinate verschoben. Diese Verschiebungen werden mittels der vierten Vergleichseinheit 11 festgestellt.

Die von der zweiten Vergleichseinheit 9 festgestellte Verkleinerung der Abbildung des Hintergrundes wird an die Steuerung 13 übergeben, welche durch einen Vergleich mit vorgegebenen Referenzdaten feststellt, ob sich die Verkleinerung innerhalb eines vorgegebenen ersten Grobtoleranzwertes befindet oder diesen überschreitet. Wird der erste Grobtoleranzwert überschritten, wird am ersten Kontrollausgang G der Steuerung 13 ein entsprechendes Signal ausgegeben.

Die von der dritten Vergleichseinheit 10 festgestellte Verdrehung der Abbildung des Hintergrundes wird an die Steuerung 13 übergeben, welche durch einen Vergleich feststellt, ob sich die Verkleinerung innerhalb eines vorgegebenen zweiten Grobtoleranzwertes befindet oder diesen überschreitet. Wird der zweite Grobtoleranzwert überschritten, wird am ersten Kontrollausgang G der Steuerung 13 ein entsprechendes Signal ausgegeben.

Die von der vierten Vergleichseinheit 11 festgestellte Verschiebung der Abbildung des Hintergrundes wird an die Steuerung 13 übergeben, welche durch einen Vergleich feststellt, ob sich die Verkleinerung innerhalb eines vorgegebenen dritten Grobtoleranzwertes befindet oder diesen überschreitet. Wird der dritte Grobtoleranzwert überschritten, wird am ersten Kontrollausgang G der Steuerung 13 ein entsprechendes Signal ausgegeben.

Entsprechend des am ersten Kontrollausgang G der Steuerung 13 anliegenden Signals kann eine manuelle Korrektur der Position der Kamera 3 vorgenommen werden. D. h., der Abstand der Kamera 3 vom Hintergrund 1 wird so lange verändert, bis das entsprechende Signal am ersten Kontrollausgang G der Steuerung 13 erlischt. In gleicher Weise wird die Kamera 3 so lange verdreht bzw. verschoben, bis die entsprechenden Signale am ersten Kontrollausgang G der Steuerung 13 erloschen sind.

Selbstverständlich lässt sich das am ersten Kontrollausgang G der Steuerung 13 anliegende Signal auch für eine automatische Korrektur der Position der Kamera 3 mittels beispielsweise elektromotorischer Antriebe verwenden.

Liegt am ersten Kontrollausgang G der Steuerung 13 kein Signal mehr an, befindet sich die Position der Kamera 3 innerhalb eines vorgegebenen ersten Toleranzwertes. Solange sich die Kamera 3 nicht exakt in der ursprünglichen Position befindet, werden vom zweiten Vergleicher 9, vom dritten Vergleicher 10 und vom vierten Vergleicher 11 aber noch Signale an die Steuerung 13 gegeben. Die Steuerung 13 errechnet hieraus entsprechende Feinkorrekturwerte, welche sie an ihrem zweiten Kontrollausgang F ausgibt. Mittels der Feinkorrekturwerte werden zunächst die Daten der sich im dritten Speicher 8 befindlichen Arbeitskopie des Referenzhintergrunds verändert. Die im dritten Speicher 7 gespeicherten Daten bleiben hierbei unverändert.

Die im vierten Speicher 8 gespeicherten Daten werden bei dem zuvor genannten Beispiel so verändert, dass die entsprechende Abbildung des Referenzhintergrunds etwa um den Faktor 0,8 verkleinert sowie etwa um fünf Grad gedreht als auch um etwa 200 Bildpunkte in Richtung der X-Koordinate und etwa um 100 Bildpunkte in Richtung der Y-Koordinate verschoben ist. Mittels der derart korrigierten Daten wird nun in der zweiten Vergleichseinheit 9, in der dritten Vergleichseinheit 10 und in der vierten Vergleichseinheit 11 ein Vergleich mit den von der Kamera 3 gelieferten aktuellen Daten des Hintergrunds 1 durchgeführt.

Wird in der Steuerung 13 festgestellt, dass die Ausgangssignale der zweiten Vergleichseinheit 9, der dritten Vergleichseinheit 10 und der vierten Vergleichseinheit 11 sich innerhalb eines zweiten Toleranzwertes befinden, bedeutet dies, dass der am zweiten Kontrollausgang F der Steuerung 13 anliegende Feinkorrekturwert eine genügend große Genauigkeit hat. Mittels dieses Feinkorrekturwerts werden nun die Daten der im zweiten Speicher 5 gespeicherten Arbeitskopie der Referenzobjektdaten korrigiert, so dass im weiteren Verlauf die Daten von zu prüfenden Objekten 2 in der ersten Vergleichseinheit 6 mit den korrigierten Referenzobjektdaten verglichen werden.

## Patentansprüche

1. Verfahren zur Erfassung von Objekten (2), welche sich vor einem wenigstens ein markantes Element (1a) aufweisenden Hintergrund (1) befinden, mit einem in einer festen Position angeordneten Aufnahmeelement (3), mittels dem vom Hintergrund und gegebenenfalls von einem jeweiligen Objekt (2) ausgehende Strahlung empfangen wird, wobei das jeweilige Objekt (2) nach seiner Erfassung mit einem zugehörigen Referenzobjekt verglichen wird, wobei nach der ersten Anordnung des Aufnahmeelements (3) mittels des Aufnahmeelements (3) eine Urabbildung des Hintergrunds (1) erfasst wird und die Daten der Urabbildung gespeichert werden und nach einem Austausch des Aufnahmeelements (3) eine weitere Abbildung des Hintergrunds (1) erfasst wird, die Daten der weiteren Abbildung mit den Daten der Urabbildung verglichen werden und das Aufnahmeelement (3) so lange justiert wird, bis sich die Daten der Urabbildung und die Daten der weiteren Abbildung maximal um einen vorbestimmten maximalen Grobtoleranzwert unterscheiden, und zur anschließenden Feinjustage ein erster Korrekturwert **dadurch** gebildet wird, dass festgestellt wird, um welchen Faktor die weitere Abbildung des Hintergrunds (1) gegenüber der Urabbildung des Hintergrunds (1) vergrößert beziehungsweise verkleinert ist, sowie mittels des Korrekturwertes die Daten der Referenzobjekte korrigiert werden.

2. Verfahren zur Erfassung von Objekten (2), welche sich vor einem wenigstens ein markantes Element (1a) aufweisenden Hintergrund (1) befinden, mit einem in einer festen Position angeordneten Aufnahmeelement (3), mittels dem vom Hintergrund und gegebenenfalls von einem jeweiligen Objekt (2) ausgehende Strahlung empfangen wird, wobei das jeweilige Objekt (2) nach seiner Erfassung mit einem zugehörigen Referenzobjekt verglichen wird, wobei nach der ersten Anordnung des Aufnahmeelements (3) mittels des Aufnahmeelements (3) eine Urabbildung des Hintergrunds (1) erfasst wird und die Daten der Urabbildung gespeichert werden und nach einem Austausch des Aufnahmeelements (3) eine weitere Abbildung des Hintergrunds (1) erfasst wird, die Daten der weiteren Abbildung mit den Daten der Urabbildung verglichen werden und das Aufnahmeelement (3) so lange justiert wird, bis sich die Daten der Urabbildung und die Daten der weiteren Abbildung maximal um einen vorbestimmten maximalen Grobtoleranzwert unterscheiden, und zur anschließenden Feinjustage ein zweiter Korrekturwert **dadurch** gebildet wird, dass festgestellt wird, um wie viel Grad die weitere Abbildung des Hintergrunds (1) gegenüber der Urabbildung des Hintergrunds (1) in einem Polar-Koordinatensystem gedreht ist, sowie mittels des Korrekturwertes die Daten der Referenzobjekte korrigiert werden.

3. Verfahren zur Erfassung von Objekten (2), welche sich vor einem wenigstens ein markantes Element (1a) aufweisenden Hintergrund (1) befinden, mit einem in einer festen Position angeordneten Aufnahmeelement (3), mittels dem vom Hintergrund und gegebenenfalls von einem jeweiligen Objekt (2) ausgehende Strahlung empfangen wird, wobei das jeweilige Objekt (2) nach seiner Erfassung mit einem zugehörigen Referenzobjekt verglichen wird, wobei nach der ersten Anordnung des Aufnahmeelements (3) mittels des Aufnahmeelements (3) eine Urabbildung des Hintergrunds (1) erfasst wird und die Daten der Urabbildung gespeichert werden und nach einem Austausch des Aufnahmeelements (3) eine weitere Abbildung des Hintergrunds (1) erfasst wird, die Daten der weiteren Abbildung mit den Daten der Urabbildung verglichen werden und das Aufnahmeelement (3) so lange justiert wird, bis sich die Daten der Urabbildung und die Daten der weiteren Abbildung maximal um einen vorbestimmten maximalen Grobtoleranzwert unterscheiden, und bei einem rasterförmig angeordnete Abbildungspunkte aufweisenden Aufnahmeelement (3) zur anschließenden Feinjustage ein dritter Korrekturwert **dadurch** gebildet wird, dass festgestellt wird, um wie viele Abbildungspunkte die weitere Abbildung des Hintergrunds (1) gegenüber der Urabbildung des Hintergrunds (1) in einem rechtwinkligen Koordinatensystem jeweils in Richtung der beiden Koordinaten verschoben ist, sowie mittels des Korrekturwertes die Daten der Referenzobjekte korrigiert werden.

4. Verfahren nach einem der Ansprüche 1 bis 3,
**dadurch gekennzeichnet, dass** Daten der weiteren Abbildung des Hintergrundes (1) mit dem jeweils reziproken Korrekturwert korrigiert werden und aus einem Vergleich der so korrigierten Daten mit den betreffenden Daten der Urabbildung ein Genauigkeitswert ermittelt wird.

5. Verfahren nach einem der Ansprüche 1 bis 4,
**dadurch gekennzeichnet, dass** das markante Element (1a) durch eine vorbestimmte Anordnung von Strahlungssendern gebildet wird, welche vom Aufnahmeelement erfassbar ist.

6. Anordnung zur Durchführung eines Verfahrens nach einem der Ansprüche 1 bis 5, zur Erfassung von Objekten (2), welche sich vor einem wenigstens ein markantes Element (1a) aufweisenden Hintergrund (1) befinden, mit einem Aufnahmeelement (3), mittels dem eine Abbildung des Objektes (2) vor dem Hintergrund (1)beziehungsweise eine Abbildung des Hintergrunds (1) erfasst wird, einem ersten Speicher (5) zur Speicherung von Referenzdaten, welche Abbildungen von fehlerfreien Objekten (2) vor dem Hintergrund (1) entsprechen, einer ersten Vergleichseinheit (6), mittels welcher jeweils aktuell erfasste Objektdaten mit den Referenzdaten verglichen werden, einem dritten Speicher (7), zur Speicherung von Daten einer Urabbildung des Hintergrundes, welche nach einer ersten Anordnung des Aufnahmeelements (3) von dem Aufnahmeelement (3) erfasst wurde, wenigstens einer weiteren Vergleichseinheit (9, 10, 11), mittels welcher nach einem Austausch des Aufnahmeelements (3) die gespeicherten Urabbildungsdaten des Hintergrunds (1) mit Daten des aktuell erfassten Hintergrundes verglichen werden, wobei als weitere Vergleichseinheit eine zweite Vergleichseinheit (9) vorhanden ist, mittels welcher festgestellt wird, um welchen Faktor die Abbildung des aktuell erfassten Hintergrundes (1) gegenüber der gespeicherten Abbildung des Hintergrundes (1) vergrößert beziehungsweise verkleinert ist, sowie eine Steuerung (13) vorhanden ist auf Basis derer Signale das Aufnahmeelement (3) so lange justiert wird, bis sich die Daten der Urabbildung und die Daten der aktuellen Abbildung maximal um einen vorbestimmten maximalen Grobtoleranz- wert unterscheiden, und die zur anschließenden Feinjustage einen korrekturwert bildet durch Vergleich des Ausgangssignals der zweiten Vergleichseinheit (9) mit zweiten Toleranzwerten, wobei die Referenzdaten entsprechend dem Faktor korrigiert werden, wenn das Ausgangssignal innerhalb der zweiten Toleranz liegt.

7. Anordnung zur Durchführung eines Verfahrens nach einem der Ansprüche 1 bis 5, zur Erfassung von Objekten (2), welche sich vor einem wenigstens ein markantes Element (1a) aufweisenden Hintergrund (1) befinden, mit einem Aufnahmeelement (3), mittels dem eine Abbildung des Objektes (2) vor dem Hintergrund (1) beziehungsweise eine Abbildung des Hintergrunds (1) erfasst wird, einem ersten Speicher (5) zur Speicherung von Referenzdaten, welche Abbildungen von fehlerfreien Objekten (2) vor dem Hintergrund (1) entsprechen, einer ersten Vergleichseinheit (6), mittels welcher jeweils aktuell erfasste Objektdaten mit den Referenzdaten verglichen werden, einem dritten Speicher (7), zur Speicherung von Daten einer Urabbildung des Hintergrundes, welche nach einer ersten Anordnung des Aufnahmeelements (3) von dem Aufnahmeelement (3) erfasst wurde, wenigstens einer weiteren Vergleichseinheit (9, 10, 11), mittels welcher nach einem Austausch des Aufnahmeelements (3) die gespeicherten Urabbildungsdaten des Hintergrunds (1) mit Daten des aktuell erfassten Hintergrundes verglichen werden, wobei als weitere Vergleichseinheit eine dritte Vergleichseinheit (10) vorhanden ist, mittels welcher festgestellt wird um wieviel Grad die Abbildung des aktuell erfassten Hintergrundes (1) gegenüber der gespeicherten Abbildung des Hintergrundes (1) gedreht ist, sowie eine Steuerung (13) vorhanden ist auf Basis derer Signale das Aufnahmeelement (3) so lange justiert wird, bis sich die Daten der Urabbildung und die Daten der aktuellen Abbildung maximal um einen vorbestimmten maximalen Grobtoleranz- wert unterscheiden, und die zur anschließenden Feinjustage einen korrekturwert bildet durch Vergleich des Ausgangssignals der driten Vergleichseinheit (10) mit zweiten Toleranzwerten, wobei die Referenzdaten entsprechend dem Faktor korrigiert werden, wenn das Ausgangssignal innerhalb der zweiten Toleranz liegt.

8. Anordnung zur Durchführung eines Verfahrens nach einem der Ansprüche 1 bis 5, zur Erfassung von Objekten (2), welche sich vor einem wenigstens ein markantes Element (1a) aufweisenden Hintergrund (1) befinden, mit einem Aufnahmeelement (3), mittels dem eine Abbildung des Objektes (2) vor dem Hintergrund (1) beziehungsweise eine Abbildung des Hintergrunds (1) erfasst wird, einem ersten Speicher (5) zur Speicherung von Referenzdaten, welche Abbildungen von fehlerfreien Objekten (2) vor dem Hintergrund (1) entsprechen, einer ersten Vergleichseinheit (6), mittels welcher jeweils aktuell erfasste Objektdaten mit den Referenzdaten verglichen werden, einem dritten Speicher (7), zur Speicherung von Daten einer Urabbildung des Hintergrundes, welche nach einer ersten Anordnung des Aufnahmeelements (3) von dem Aufnahmeelement (3) erfasst wurde, wenigstens einer weiteren Vergleichseinheit (9, 10, 11), mittels welcher nach einem Austausch des Aufnahmeelements (3) die gespeicherten Urabbildungsdaten des Hintergrunds (1) mit Daten des aktuell erfassten Hintergrundes verglichen werden, wobei bei einem rasterförmig angeordnete Abbildungspunkte aufweisenden Aufnahmeelement als weitere Vergleichseinheit eine vierte Vergleichseinheit (11) vorhanden ist, mittels welcher festgestellt wird, um wieviel Abbildungspunkte die Abbildung des aktuell erfassten Hintergrundes (1) gegenüber der gespeicherten Abbildung des Hintergrundes (1) in einem rechtwinkligen Koordinatensystem jeweils in Richtung der beiden Koordinaten verschoben ist, sowie eine Steuerung (13) vorhanden ist auf Basis derer Signale das Aufnahmeelement (3) so lange justiert wird, bis sich die Daten der Urabbildung und die Daten der aktuellen Abbildung maximal um einen vorbestimmten maximalen Grobtoleranzwert unterscheiden, und die zur anschließenden Feinjustage einen korrekturwert bildet durch Vergleich des Ausgangssignals der vierten Vergleichseinheit (11) mit zweiten Toleranzwerten, wobei die Referenzdaten entsprechend dem Faktor korrigiert werden, wenn das Ausgangssignal innerhalb der zweiten Toleranz liegt.

## Claims

1. Method for acquiring objects (2) which are located in front of a background (1) having at least one prominent element (1a), comprising a pickup element (3) arranged in a fixed position and by means of which radiation emanating from the background and, if appropriate, from a respective object (2) is received, in which the respective object (2) is compared after acquisition with an associated reference object, and in which an original image of the background (1) is acquired by means of the pickup element (3) in accordance with the first arrangement of the pickup element (3), and the data of the original image are stored and, after an exchange of the pickup element (3), a further image of the background (1) is acquired, the data of the further image are compared with the data of the original image and the pickup element (3) is adjusted until the data of the original image and the data of the further image differ at most by a prescribed maximum coarse tolerance value and, for the purpose of subsequent fine adjustment, a first correction value is formed by virtue of the fact that it is established by which factor the further image of the background (1) is magnified or demagnified in relation to the original image of the background (1), and the data of the reference objects are corrected by means of the correction value.

2. Method for acquiring objects (2) which are located in front of a background (1) having at least one prominent element (1a), comprising a pickup element (3) arranged in a fixed position and by means of which radiation emanating from the background and, if appropriate, from a respective object (2) is received, in which the respective object (2) is compared after acquisition with an associated reference object, and in which an original image of the background (1) is acquired by means of the pickup element (3) in accordance with the first arrangement of the pickup element (3), and the data of the original image are stored and, after an exchange of the pickup element (3), a further image of the background (1) is acquired, the data of the further image are compared with the data of the original image and the pickup element (3) is adjusted until the data of the original image and the data of the further image differ at most by a prescribed maximum coarse tolerance value and, for the purpose of subsequent fine adjustment, a second correction value is formed by virtue of the fact that it is established by how many degrees the further image of the background (1) is rotated in relation to the original image of the background (1) in a polar coordinate system, and the data of the reference objects are corrected by means of the correction value.

3. Method for acquiring objects (2) which are located in front of a background (1) having at least one prominent element (1a), comprising a pickup element (3) arranged in a fixed position and by means of which radiation emanating from the background and, if appropriate, from a respective object (2) is received, in which the respective object (2) is compared after acquisition with an associated reference object, and in which an original image of the background (1) is acquired by means of the pickup element (3) in accordance with the first arrangement of the pickup element (3), and the data of the original image are stored and, after an exchange of the pickup element (3), a further image of the background (1) is acquired, the data of the further image are compared with the data of the original image and the pickup element (3) is adjusted until the data of the original image and the data of the further image differ at most by a prescribed maximum coarse tolerance value and, given a pickup element (3) having imaging points arranged in matrix form, a third correction value is formed for subsequent fine adjustment by virtue of the fact that it is established by how many imaging points the further image of the background (1) is displaced in relation to the original image of the background (1) in a rectangular coordinate system in the respective directions of the two coordinates, and the data of the reference objects are corrected by means of the correction value.

4. Method according to one of Claims 1 to 3, **characterized in that** the data of the further image of the background (1) is corrected with the respectively reciprocal correction value, and an accuracy value is determined from a comparison of the data thus corrected with the relevant data of the original image.

5. Method according to one of Claims 1 to 4, **characterized in that** the prominent element (1a) is formed by a predetermined arrangement of radiation transmitters which can be acquired by the pickup element.

6. Arrangement for carrying out a method according to one of Claims 1 to 5, for acquiring objects (2) which are located in front of a background (1) having at least one prominent element (1a), comprising a pickup element (3) by means of which an image of the object (2) in front of the background (1) or an image of the background (1) is acquired, a first memory (5) for storing reference data which correspond to images of faultless objects (2) in front of the background (1), a first comparison unit (6) by means of which respectively currently acquired object data are compared with the reference data, a third memory (7) for storing data of an original image of the background which was acquired by the pickup element (3) in accordance with a first arrangement of the pickup element (3), at least one further comparison unit (9, 10, 11) by means of which, after an exchange of the pickup element (3), the stored original image data of the background (1) are compared with data of the currently acquired background, in which there is present as further comparison unit a second comparison unit (9) by means of which it is established by which factor the image of the currently acquired background (1) is magnified or demagnified in relation to the stored image of the background (1), and in which there is present a controller (13) on the basis of whose signals the pickup element (3) is adjusted until the data of the original image and the data of the current image differ at most by a prescribed maximum coarse tolerance value, and which, for the purpose of subsequent fine adjustment, forms a correction value by comparing the output signal of the second comparison unit (9) with second tolerance values, and in which the reference data are corrected in accordance with the factor when the output signal lies within the second tolerance.

7. Arrangement for carrying out a method according to one of Claims 1 to 5, for acquiring objects (2) which are located in front of a background (1) having at least one prominent element (1a), comprising a pickup element (3) by means of which an image of the object (2) in front of the background (1) or an image of the background (1) is acquired, a first memory (5) for storing reference data which correspond to images of faultless objects (2) in front of the background (1), a first comparison unit (6) by means of which respectively currently acquired object data are compared with the reference data, a third memory (7) for storing data of an original image of the background which was acquired by the pickup element (3) in accordance with a first arrangement of the pickup element (3), at least one further comparison unit (9, 10, 11) by means of which, after an exchange of the pickup element (3), the stored original image data of the background (1) are compared with data of the currently acquired background, in which there is present as further comparison unit a third comparison unit (10) by means of which it is established by how many degrees the image of the currently acquired background (1) is rotated in relation to the stored image of the background (1), and in which there is present a controller (13) on the basis of whose signals the pickup element (3) is adjusted until the data of the original image and the data of the current image differ at most by a prescribed maximum coarse tolerance value, and which, for the purpose of subsequent fine adjustment, forms a correction value by comparing the output signal of the third comparison unit (10) with second tolerance values, and in which the reference data are corrected in accordance with the factor when the output signal lies within the second tolerance.

8. Arrangement for carrying out a method according to one of Claims 1 to 5, for acquiring objects (2) which are located in front of a background (1) having at least one prominent element (1a), comprising a pickup element (3) by means of which an image of the object (2) in front of the background (1) or an image of the background (1) is acquired, a first memory (5) for storing reference data which correspond to images of faultless objects (2) in front of the background (1), a first comparison unit (6) by means of which respectively currently acquired object data are compared with the reference data, a third memory (7) for storing data of an original image of the background which was acquired by the pickup element (3) in accordance with a first arrangement of the pickup element (3), at least one further comparison unit (9, 10, 11) by means of which, after an exchange of the pickup element (3), the stored original image data of the background (1) are compared with data of the currently acquired background, in which, given a pickup element having imaging points arranged in matrix form, there is present as further comparison unit a fourth comparison unit (11) by means of which it is established by how many imaging points the image of the currently acquired background (1) is displaced in relation to the stored image of the background (1) in the rectangular coordinate system in the respective directions of the two coordinates, and in which there is present a controller (13) on the basis of whose signals the pickup element (3) is adjusted until the data of the original image and the data of the current image differ at most by a prescribed maximum coarse tolerance value, and which, for the purpose of subsequent fine adjustment, forms a correction value by comparing the output signal of the fourth comparison unit (11) with second tolerance values, and in which the reference data are corrected in accordance with the factor when the output signal lies within the second tolerance.

## Revendications

1. Procédé d'acquisition d'objets ( 2 ) qui se trouvent devant un arrière-plan ( 1 ) ayant au moins un élément ( 1a ) marquant, comprenant un élément ( 3 ) d'enregistrement, qui est disposé en une position fixe et au moyen duquel du rayonnement partant de l'arrière-plan et, le cas échéant, d'un objet ( 2 ) est reçu, l'objet ( 2 ) étant comparé, après son acquisition, à un objet de référence associé, dans lequel, après le premier montage de l'élément ( 3 ) d'enregistrement, on acquiert une reproduction d'origine de l'arrière-plan ( 1 ) au moyen de l'élément ( 3 ) d'enregistrement et on mémorise les données de la reproduction d'origine et, après un changement de l'élément ( 3 ) d'enregistrement, on acquiert une autre reproduction de l'arrière-plan ( 1 ), on compare les données de l'autre reproduction aux données de la reproduction d'origine et on ajuste l'élément ( 3 ) d'enregistrement jusqu'à ce que les données de la reproduction d'origine et les données de l'autre reproduction se distinguent au maximum d'une valeur grossière de tolérance maximum déterminée à l'avance et, pour l'ajustage fin venant ensuite, on forme une première valeur de correction de manière à constater de quel facteur l'autre reproduction de l'arrière-plan ( 1 ) doit être agrandie ou rapetissée par rapport à la reproduction d'origine de l'arrière-plan ( 1 ), ainsi que l'on corrige les données des objets de référence au moyen de la valeur de correction.

2. Procédé d'acquisition d'objets ( 2 ) qui se trouvent devant un arrière-plan ( 1 ) ayant au moins un élément ( 1a ) marquant, comprenant un élément ( 3 ) d'enregistrement, qui est disposé en une position fixe et au moyen duquel du rayonnement partant de l'arrière-plan et, le cas échéant, d'un objet ( 2 ) est reçu, l'objet ( 2 ) étant comparé, après son acquisition, à un objet de référence associé, dans lequel, après le premier montage de l'élément ( 3 ) d'enregistrement, on acquiert une reproduction d'origine de l'arrière-plan ( 1 ) au moyen de l'élément ( 3 ) d'enregistrement et on mémorise les données de la reproduction d'origine et, après un changement de l'élément ( 3 ) d'enregistrement, on acquiert une autre reproduction de l'arrière-plan ( 1 ), on compare les données de l'autre reproduction aux données de la reproduction d'origine et on ajuste l'élément ( 3 ) d'enregistrement jusqu'à ce que les données de la reproduction d'origine et les données de l'autre reproduction se distinguent au maximum d'une valeur grossière de tolérance maximum déterminée à l'avance et, pour l'ajustage fin venant ensuite, on forme une deuxième valeur de correction en constatant de combien de degrés l'autre reproduction de l'arrière-plan ( 1 ) est tournée dans un système de coordonnées polaires par rapport à la reproduction d'origine de l'arrière-plan ( 1 ), ainsi que l'on corrige les données des objets de référence au moyen de la valeur de correction.

3. Procédé d'acquisition d'objets ( 2 ) qui se trouvent devant un arrière-plan ( 1 ) ayant au moins un élément ( 1a ) marquant, comprenant un élément ( 3 ) d'enregistrement, qui est disposé en une position fixe et au moyen duquel du rayonnement partant de l'arrière-plan et, le cas échéant, d'un objet ( 2 ) est reçu, l'objet ( 2 ) étant comparé, après son acquisition à un objet de référence associé, dans lequel, après le premier montage de l'élément ( 3 ) d'enregistrement, on acquiert une reproduction d'origine de l'arrière-plan ( 1 ) au moyen de l'élément ( 3 ) d'enregistrement et on mémorise les données de la reproduction d'origine et, après un changement de l'élément ( 3 ) d'enregistrement, on acquiert une autre reproduction de l'arrière-plan ( 1 ), on compare les données de l'autre reproduction aux données de la reproduction d'origine et on ajuste l'élément ( 3 ) d'enregistrement jusqu'à ce que les données de la reproduction d'origine et les données de l'autre reproduction se distinguent au maximum d'une valeur grossière de tolérance maximum déterminée à l'avance et, pour un élément ( 3 ) d'enregistrement ayant des points de reproduction disposés en forme de trame, on forme, pour l'ajustage fin venant ensuite, une troisième valeur de correction en constatant de combien de points de reproduction l'autre reproduction de l'arrière-plan ( 1 ) doit être décalée, respectivement en direction des deux coordonnées, dans un système de coordonnées à angle droit, par rapport à la reproduction d'origine de l'arrière-plan ( 1 ), ainsi que l'on corrige les données des objets de référence au moyen de la valeur de correction.

4. Procédé suivant l'une des revendications 1 à 3, **caractérisé en ce que** l'on corrige les données de l'autre reproduction de l'arrière-plan ( 1 ) par la valeur de correction respectivement réciproque et l'on détermine une valeur de précision, en comparant les données ainsi corrigées aux données concernées de la reproduction d'origine.

5. Procédé suivant l'une des revendications 1 à 4, **caractérisé en ce que** l'on forme l'élément ( 1a ) marquant par un agencement déterminé à l'avance d'émetteurs de rayonnement, qui peut être détecté par l'élément d'enregistrement.

6. Dispositif pour la mise en oeuvre d'un procédé suivant l'une des revendications 1 à 5, pour l'acquisition d'objets ( 2 ) qui se trouvent devant un arrière-plan ( 1 ) ayant au moins un élément ( 1a ) marquant, comprenant un élément ( 3 ) d'enregistrement au moyen duquel on acquiert une reproduction de l'objet ( 2 ) devant l'arrière-plan ( 1 ) ou une reproduction de l'arrière-plan ( 1 ), une première mémoire ( 5 ) pour mémoriser des données de référence qui correspondent à des reproductions d'objet ( 2 ) sans défaut devant l'arrière plan ( 1 ), une première unité ( 6 ) de comparaison, au moyen de laquelle on compare respectivement des données d'objet acquis instantanément aux données de référence, une troisième mémoire ( 7 ) de mémorisation de données d'une reproduction d'origine de l'arrière-plan qui a été acquise par l'élément ( 3 ) d'enregistrement après un premier montage de l'élément ( 3 ) d'enregistrement, au moins une autre unité ( 9, 10, 11 ) de comparaison, au moyen de laquelle après un changement de l'élément ( 3 ) d'enregistrement, on compare les données de reproduction d'origine mémorisées de l'arrière-plan ( 1 ) à des données de l'arrière-plan acquis instantanément, dans lequel comme autre unité ( 2 ) de comparaison, il y a une deuxième unité ( 9 ) de comparaison, au moyen de laquelle on constate de quel facteur la reproduction de l'arrière-plan ( 1 ) acquise instantanément est agrandie ou rapetissée par rapport à la reproduction mémorisée de l'arrière-plan ( 1 ), et il y a une commande ( 13 ) sur la base des signaux de laquelle on ajuste l'élément ( 3 ) d'enregistrement jusqu'à ce que les données de la reproduction d'origine et les données de la reproduction instantanée se distinguent au maximum d'une valeur de tolérance grossière maximum déterminée à l'avance et qui forme une valeur de correction pour l'ajustage fin venant ensuite, en comparant le signal de sortie de la deuxième unité ( 9 ) de comparaison à des deuxièmes valeurs de tolérance, les données de référence étant corrigées en fonction du facteur, lorsque le signal de sortie se trouve dans la deuxième tolérance.

7. Dispositif pour la mise en oeuvre d'un procédé suivant l'une des revendications 1 à 5, pour l'acquisition d'objets ( 2 ) qui se trouvent devant un arrière-plan ( 1 ) ayant au moins un élément ( 1a ) marquant, comprenant un élément ( 3 ) d'enregistrement, au moyen duquel on acquiert une reproduction de l'objet ( 2 ) devant l'arrière-plan ( 1 ) ou une reproduction de l'arrière-plan ( 1 ), une première mémoire ( 5 ) pour mémoriser des données de référence qui correspondent à des reproductions d'objet ( 2 ) sans défaut devant l'arrière plan ( 1 ), une première unité ( 6 ) de comparaison, au moyen de laquelle on compare respectivement des données d'objet acquis instantanément aux données de référence, une troisième mémoire ( 7 ) de mémorisation de données d'une reproduction d'origine de l'arrière-plan qui a été acquise par l'élément ( 3 ) d'enregistrement, après un premier montage de l'élément ( 3 ) d'enregistrement, au moins une autre unité ( 9, 10, 11 ) de comparaison, au moyen de laquelle, après un changement de l'élément ( 3 ) d'enregistrement, on compare les données de reproduction d'origine mémorisées de l'arrière-plan ( 1 ) à des données de l'arrière-plan acquis instantanément, dans lequel, comme autre unité ( 2 ) de comparaison, il y a une troisième unité ( 10 ) de comparaison, au moyen de laquelle on constate de combien de degrés la reproduction de l'arrière-plan ( 1 ) acquis instantanément est tournée par rapport à la reproduction mémorisée de l'arrière-plan ( 1 ) et il y a une commande ( 13 ) sur la base des signaux de laquelle l'élément ( 3 ) d'enregistrement est ajusté jusqu'à ce que les données de la reproduction d'origine et les données de la reproduction instantanée se distinguent au maximum d'une valeur de tolérance grossière maximum déterminée à l'avance et qui forme une valeur de correction pour l'ajustage fin venant ensuite, en comparant le signal de sortie de la troisième unité ( 10 ) de comparaison à des deuxièmes valeurs de tolérance, les données de référence étant corrigées en fonction du facteur lorsque le signal de sortie est dans la deuxième tolérance.

8. Dispositif pour la mise en oeuvre d'un procédé suivant l'une des revendications 1 à 5, pour l'acquisition d'objets ( 2 ) qui se trouvent devant un arrière-plan ( 1 ) ayant au moins un élément ( 1a ) marquant, comprenant un élément ( 3 ) d'enregistrement, au moyen duquel on acquiert une reproduction de l'objet ( 2 ) devant l'arrière-plan ( 1 ) ou une reproduction de l'arrière-plan ( 1 ), une première mémoire ( 5 ) pour mémoriser des données de référence qui correspondent à des reproductions d'objet ( 2 ) sans défaut devant l'arrière plan ( 1 ), une première unité ( 6 ) de comparaison, au moyen de laquelle on compare respectivement des données d'objet acquises instantanément aux données de référence, une troisième mémoire ( 7 ) de mémorisation de données d'une reproduction d'origine de l'arrière-plan qui a été acquis par l'élément ( 3 ) d'enregistrement après un premier montage de l'élément ( 3 ) d'enregistrement, au moins une autre unité ( 9, 10, 11 ) de comparaison au moyen de laquelle, après un changement de l'élément ( 3 ) d'enregistrement, on compare les données de reproduction d'origine mémorisées de l'arrière-plan ( 1 ) à des données de l'arrière-plan acquis instantanément, dans lequel, pour un élément d'enregistrement ayant des points de reproduction disposés en forme de trame, il y a une quatrième unité ( 11 ) de comparaison, en tant qu'autre unité de comparaison, au moyen de laquelle on constate de combien de points de reproduction la reproduction de l'arrière-plan ( 1 ) acquis instantanément est décalée respectivement en direction des deux coordonnées, dans un système de coordonnées à angle droit, par rapport à la reproduction mémorisée de l'arrière-plan ( 1 ) et il y a une commande ( 13 ) sur la base des signaux de laquelle l'élément ( 3 ) d'enregistrement est ajusté jusqu'à ce que les données de la reproduction d'origine et les données de la reproduction instantanée se distinguent au maximum d'une valeur de tolérance grossière maximum déterminée à l'avance et qui forme une valeur de correction pour l'ajustage fin venant ensuite par comparaison du signal de sortie de la quatrième unité ( 11 ) de comparaison à des deuxièmes valeurs de tolérance, les données de référence étant corrigées en fonction du facteur lorsque le signal de sortie se trouve dans la deuxième tolérance.
